# EUROPEAN PATENT APPLICATION

(11) **EP 1 875 811 A1**
(43) Date of publication of application: **09.01.2008**
(21) Application number: 07380199.5
(22) Date of filing: 02.07.2007
(51) Int. Cl.: A23K 1/00, A23K 1/10, A23K 1/18

(54) **Chewable and/or edible product for pets and other animals**

(30) Priority: 03.07.2006 ES 200601792
(71) Applicant: VISCOFAN S.A., E-31007 Pamplona (ES)
(72) Inventor: Garcia Martinez, Ion Iñaki, 31007 Pamplona (ES)
(74) Representative: Carpintero Lopez, Francisco

(57) **Abstract**

The present invention refers to a chewable and/or edible product for pets and other animals, especially for companion animals, mainly composed of a fibrous collagenous matrix, formed into any shape or design. This product is natural and harmless, and its water content is such that it can be supplied to the animal as a dry, semi-wet or wet product with the desired texture, according to the specific habits and preferences of a wide range of animals. This product, as well as stimulating the chewing activity in the animal, also functions as a vehicle to administer water or nutritive, preventive or therapeutic substances to the animal. The invention also refers to the use of fibrous collagen to prepare this product, and a fibrous collagen matrix formed in any shape or three-dimensional design. Finally, the invention refers to a method to manufacture this product.

## Description

### FIELD OF THE INVENTION

The present invention belongs to the area of animal nutrition and husbandry. More specifically, it refers to a chewable and/or edible product for pets and other animals, especially for companion animals, based on collagen. This is a natural and harmless product, with a highly variable water content, so it can be given to the animal in the form of a dry, semiwet or wet product with the desired texture: soft and meaty when it has a high water content, or tough and hard when it has a lower water content, and can change from one to the other by hydration-dehydration. In this way, this product can be adapted to the habits and preferences of a wide range of animals. On the other hand, this product encourages the animal to chew, has an entertainment function and, also, can be a vehicle by which the animal is administered water or nutritive, preventive or therapeutic substances.

### BACKGROUND OF THE INVENTION

Nowadays, the concept of pets has become much broader to encompass a wide range of animals apart from the more traditional dogs and cats. Many of these are exotic, are still far from being truly domesticated, or never will be. Species on the market belong to all the animal phyla, from invertebrates to higher vertebrates, and the latter can include rodents, mustelids, canids, felids, suids (miniature pigs), and many more.

To date, most chewable and/or edible food products for pets and companion animals, especially in relation to their water content, can be considered as dry or semiwet products. Their water content is, usually, lower than 50% by weight since, when a nutritional product is desired for pets, for example as a pet food or chewable snack, the water content in the period from its manufacture to its consumption is very important. This can affect its stability and maintenance of the product's organoleptic and nutritional characteristics and is also important to conserve the microbiological status of the product, and therefore its safety: lower water activities are related to better and longer conservation. Hence, for example, in the patent US 6379725 of Wang et al., an edible toy for pets is described that is made of a thermoplastic composition, containing plant and animal proteins, especially soya proteins combined with casein or gelatin, as well as additives and nutritional ingredients with a water content is adjusted to 8-15% by weight, to prevent mould formation and putrefaction. Similarly, in patent application EP 1018519 A2 of T.F.H. Publications Inc., an edible product or chewable toy is described for animals based on starch, with a water content of 20% by weight or less. Similarly, in the patent US 4781939 of Martin et al. a product is described for human or animal consumption obtained from a meat emulsion with a layered structure, with a meaty appearance and a texture similar to a cut of natural meat, with a water content of 50-65%. This product must be canned according to standard production processes for canned foods, with a high water content, or must be dried before being stored in loose form. On the other hand, in patent application WO 03/024240 of Nestec S.A., a food product for animals is described that comprises an absorbent body that retains a liquid vehicle in which a functional ingredient is incorporated and that presents a water content between 30 and 60% by weight. This absorbent body is obtained from a gelifiable mixture of water and proteins (meat proteins in general or, especially, minced deboned meat, lungs or liver). However, the water is retained in the product which expands like a sponge, and this wets, in other words, releases water when physical changes take place (syneresis).

Hence, from an economic perspective, it would be advantageous to have a chewable and/or edible product with a high water content, which also has a texture more similar to products with a high solid content, but does not present the aforementioned disadvantages. This type of product, as well as serving to satisfy the urge to chew of some animals, would also be an economic vector of hydration for animals in dry environments or for animals, which, after intense physical exercise, should not drink excessive amounts of water.

Nonetheless, some pets do not easily accept dry food products. The animal food industry must, therefore, elaborate wet food products, based on meat, meat by-products or fish, combined with other nutritional and attractant components, packaged in less convenient storage systems (small packaged units), which are often more expensive or sophisticated (cans, intelligent packaging) than those used for dry products (paper sacks), and which affects the price, presentation and marketing of these products.

Moreover, there are some animals considered as pets, which, owing to their different habits or preferences, do not tend to accept edible rewards, offered for purposes of entertainment, health or buccodental hygiene. Hence, cats, ferrets and other carnivorous mammals do not easily accept titbits that do not form part of their regular diet and are very particular about the texture of these.

On the other hand, some birds, reptiles (tortoises, snakes and lizards), amphibians, fish and other pets appreciate the addition of fresh prey to the diet and are always highly selective when offered dried products.

In aquarophilia, the administration to fishes of dry food, micro-encapsulated chemical compositions, or live food items (worms, artemia-crustaceans and their larvae, etc.), in addition to being rejected in some cases, also generates inconveniences related to maintaining live cultures of these invertebrates, to the difficulty in incorporating any additional substances to these foods and, consequently, inefficacity and high cost.

For all these reasons, it would be highly advantageous to have an edible product of natural origin, mainly for use for entertainment purposes, with a variable texture ranging from soft and fleshy, similar to that of fish flesh, or a more consistent texture, like meat from poultry or mammals, to the chewy and even hard and tough texture like that of tanned leather which, under different shapes and combinations of colour and aromas, could be attractive to animals in relation to their textural and organoleptic preferences, even for animals that tend to reject dried foods or whose diet is based on live animals with a soft and wet texture, and would induce in them a chewing activity. Moreover, it would be highly advantageous if this product could have an entertainment function, like a toy, for some pets that are highly selective about the texture of the objects they chew and, especially, for cats, or felids in general, mustelids (ferrets, minks, etc.) and carnivorous mammals in general.

Another additional advantage would be that this product could serve as a vehicle to administer water, nutritive, preventive or therapeutic substances for use in the prevention or treatment of diverse clinical diseases in animals, especially, in animals that reject dry products or those with hard textures. It would also be highly advantageous if this product could be changed from a dry state to a wet state by a simple process of rehydration, changing its texture in a few minutes, so that, just before it is administered to the animal, or during salivation while being chewed, it more readily releases the flavours and aromas incorporated in it.

Hence, in the state of the art there is still the need to provide a chewable and/or edible product for pets and other animals, especially for companion animals, with a highly variable texture (dry, wet or semi-wet) that can exist in many different forms and can incorporate, in addition to nutritional, therapeutic or prophylactic agents, different organoleptic additives, which increases the range of animals that can use it, maintaining its organoleptic and nutritional properties and prolonging its shelf-life.

The solution provided by this invention, consists in providing a chewable and/or edible product for pets and other animals, especially for companion animals, based on fibrous collagen composed mainly of a fibrous collagen matrix made in any shape or design.

This fibrous collagen matrix, has a great potential to "swell" with water, achieving this maximum potential at acid or basic pH (pH 2 or pH 13) due to an osmotic effect when the pH is very acidic or very basic, although absorption can also be increased by adding some salts such as calcium, for example, that produce a lyotropic swelling, although this is less important.

This is an important economic advantage, since a swollen matrix with a very low solid content can be obtained, in other words, with a large volume and weight but with few solids. The water is retained structurally in the fibrous matrix; it is not a sponge effect such as that occurring in meat protein products and, therefore, the swollen product does not wet or release water due to physical changes (syneresis), which is clearly advantageous compared to these meat protein products. This property is far superior to the swelling capacity of meat proteins or other proteins. Moreover, because of the fibrous structure of the collagen, at a low concentration of solids, the matrix, after "coagulating or crosslinking" has a strong consistency and very good mechanical properties, better than those of other proteins, which constitutes another advantage, since very good textures can be obtained at very low concentrations of solids. On the other hand, the fibrous structure of the collagen contributes to giving the surface a fibrous appearance, conferring it a meaty appearance, which is very important from an organoleptic perspective, while, paradoxically, this aspect is not achieved with meat proteins.

### OBJECT OF THE INVENTION

The object of the present invention is, therefore, to provide a chewable and/or edible product for pets and other animals, especially companion animals, composed mainly of a fibrous collagen matrix formed into any shape or design.

Another object of this invention is to provide the use of this fibrous collagen to prepare this chewable and/or edible product for pets and other animals, especially for companion animals.

Another object of this invention is to provide a collagen matrix formed in any shape or three-dimensional design.

Finally, another object of the present invention is to provide a method to produce this chewable and/or edible product for pets and other animals, especially for companion animals.

### DESCRIPTION OF THE FIGURES

Figure 1

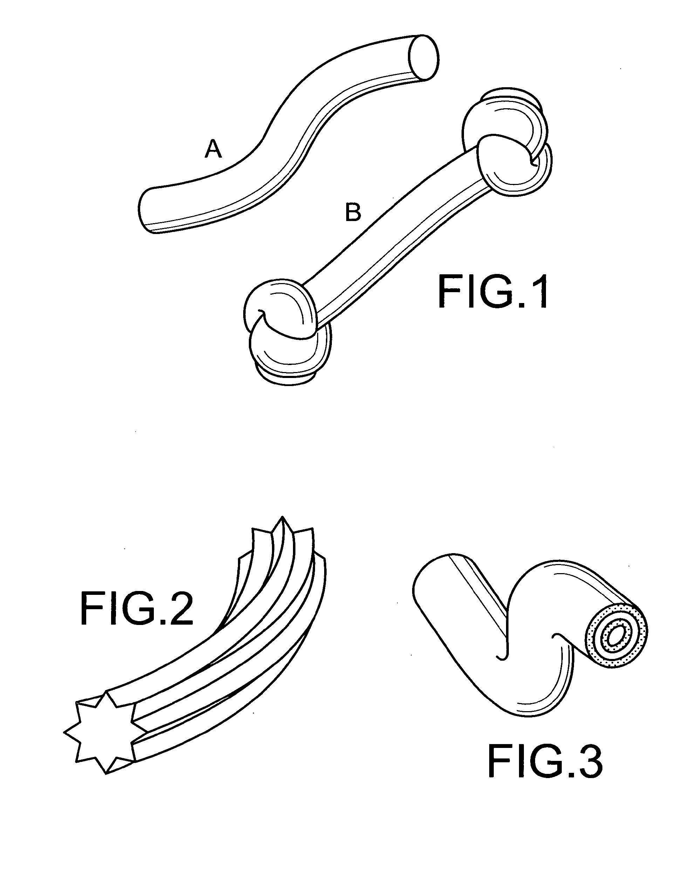

   Figure 1 shows a chewable and/or edible product for pets and other animals, especially for companion animals, formed in the shape of a cylindrical rope (Fig. 1A) or a cylindrical rope with knots at each end (Fig. 1 B).
Figure 2
   Figure 2 shows a chewable and/or edible product for pets and other animals, especially for companion animals, formed in the shape of a non-cylindrical rope with a regular star-shaped cross-section.
Figure 3
   Figure 3 shows a chewable and/or edible product for pets and other animals, especially for companion animals, formed in the shape of a cylindrical rope composed of several concentric layers of different composition.
Figure 4

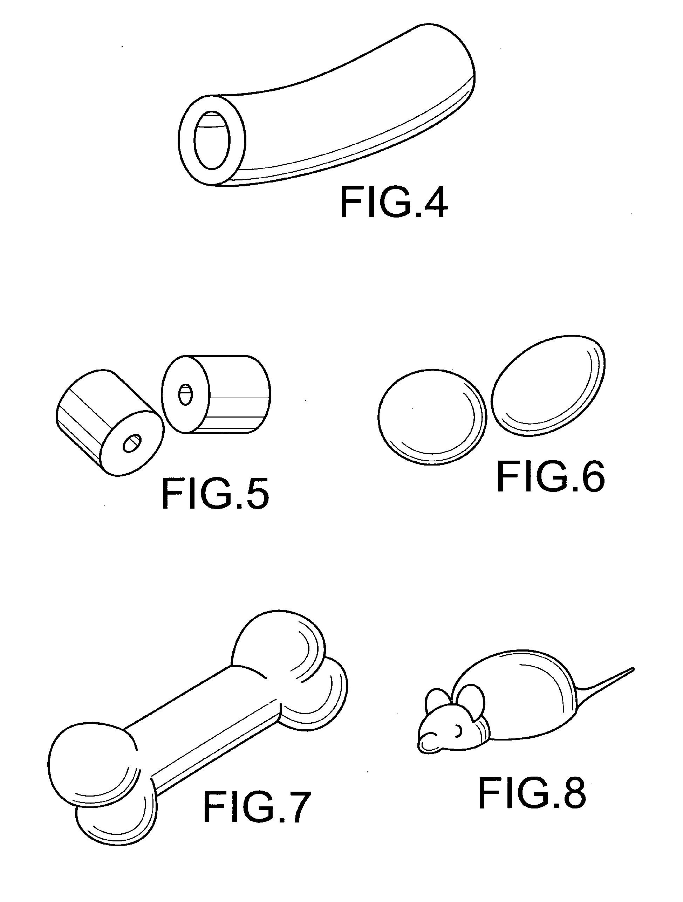

   Figure 4 shows a chewable and/or edible product for pets and other animals, especially for companion animals, formed in the shape of a tube.
Figure 5
   Figure 5 shows a chewable and/or edible product for pets and other animals, especially for companion animals, formed in the shape of a tube cut into segments with a diameter similar to its length.
Figure 6
   Figure 6 shows a chewable and/or edible product for pets and other animals, especially for companion animals, formed in the shape of a sphere, and in the shape of a spheroid or an oval.
Figure 7
   Figure 7 shows a chewable and/or edible product for pets and other animals, especially for companion animals, formed in the shape of a bone.
Figure 8
   Figure 8 shows a chewable and/or edible product for pets and other animals, especially for companion animals, formed in the shape of a mouse.
Figure 9

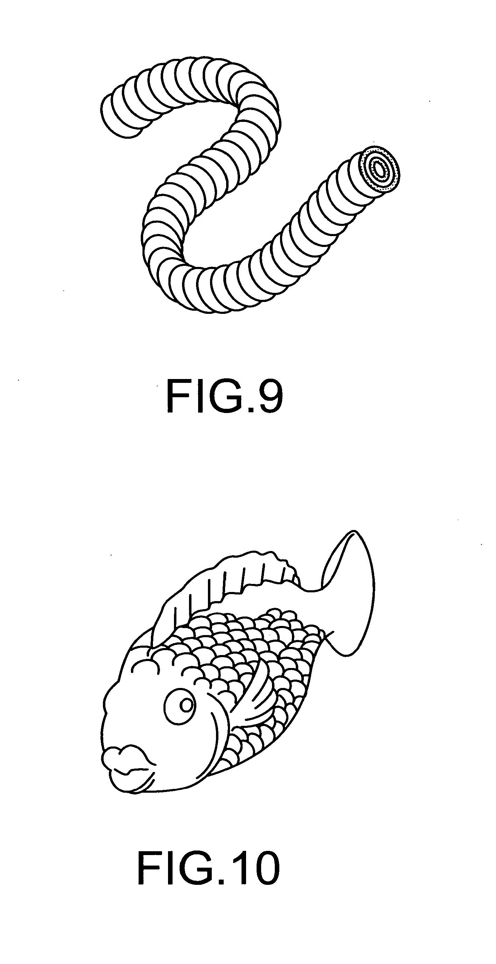

   Figure 9 shows a chewable and/or edible product for pets and other animals, especially for companion animals, formed in the shape of a cylindrical rope, composed of several concentric layers of different composition, provided with striation or transversal segmentation.
Figure 10
   Figure 10 shows a chewable and/or edible product for pets and other animals, especially for companion animals, formed in the shape of a fish.
Figure 11

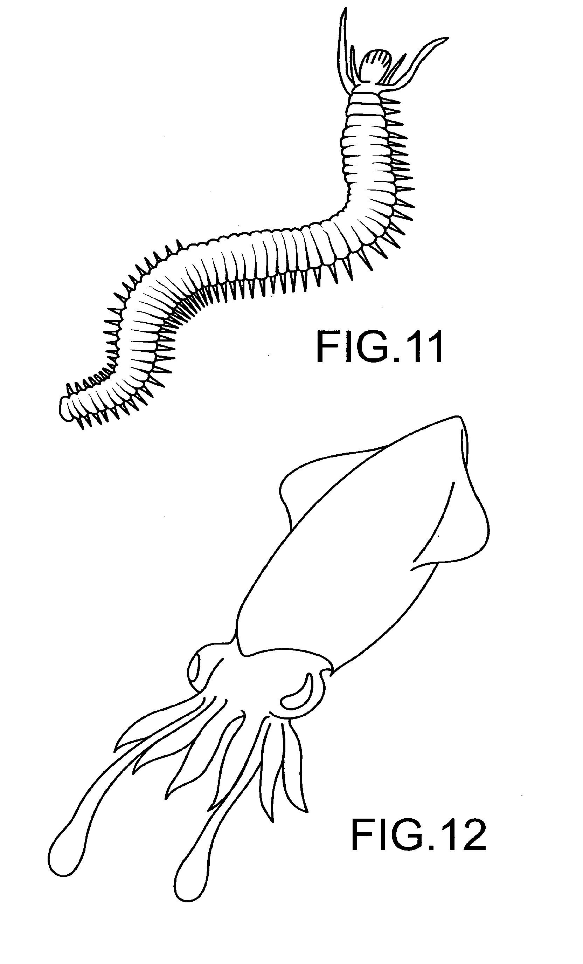

   Figure 11 shows a chewable and/or edible product for pets and other animals, especially for companion animals, formed in the shape of a marine polychaete worm.
Figure 12
   Figure 12 shows a chewable and/or edible product for pets and other animals, especially for companion animals, formed in the shape of a squid.
Figure 13

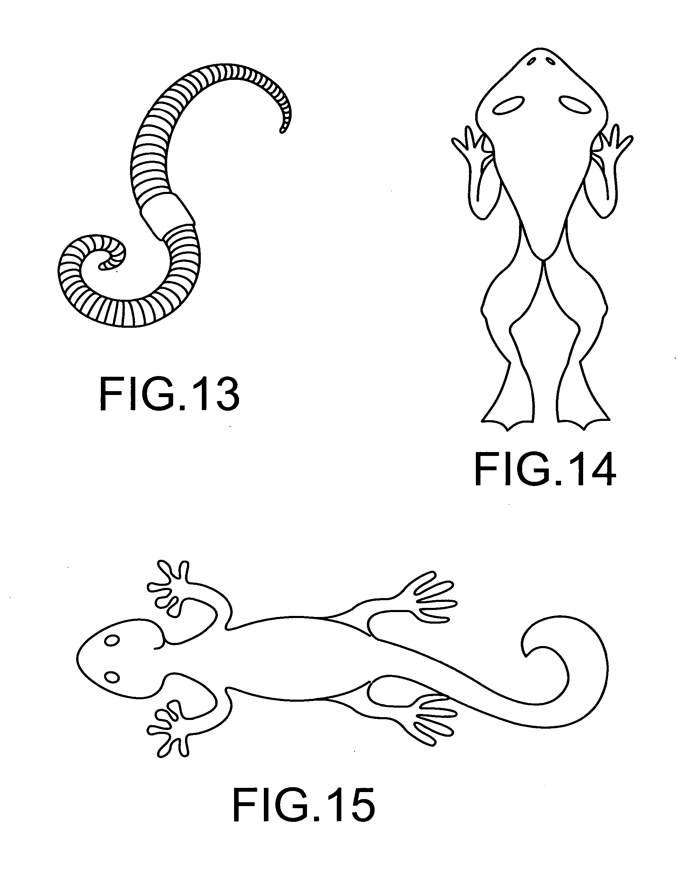

   Figure 13 shows a chewable and/or edible product for pets and other animals, especially for companion animals, formed in the shape of an earthworm.
Figure 14
   Figure 14 shows a chewable and/or edible product for pets and other animals, especially for companion animals, formed in the shape of a frog.
Figure 15
   Figure 15 shows a chewable and/or edible product for pets and other animals, especially for companion animals, formed in the shape of a salamander or newt.
Figure 16

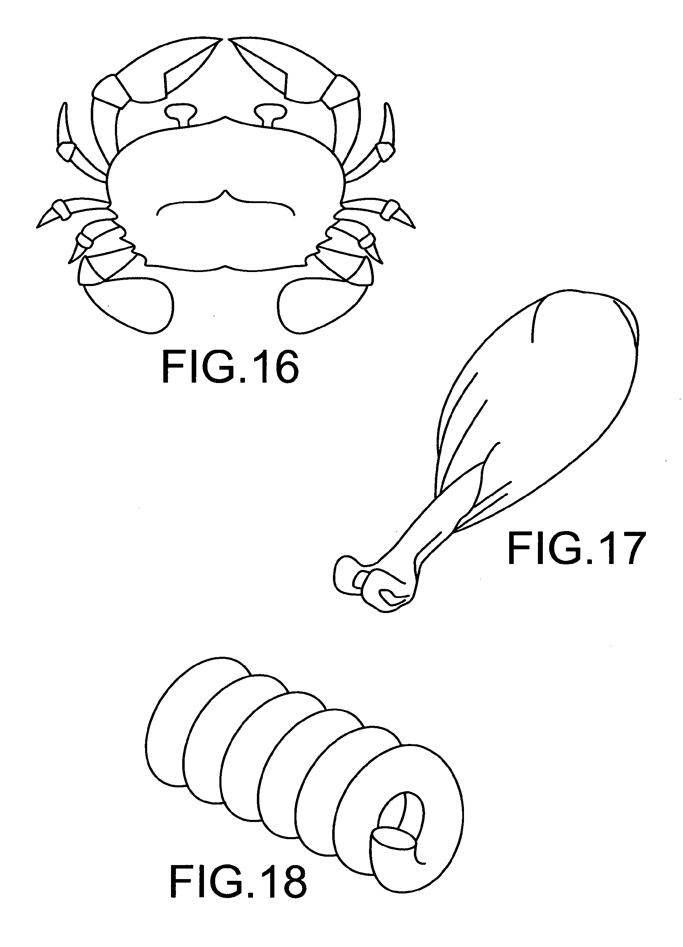

   Figure 16 shows a chewable and/or edible product for pets and other animals, especially for companion animals, formed in the shape of a crab.
Figure 17
   Figure 17 shows a chewable and/or edible product for pets and other animals, especially for companion animals, made in the form of a chicken drumstick, with a plastic bone as the structural support for the fibrous collagen matrix, which is formed simulating meat.
Figure 18
   Figure 18 shows a chewable and/or edible product for pets and other animals, especially for companion animals, formed in the shape of a twisted tube to generate a helicoidal profile.

### DETEAILLED DESCRIPTION OF THE INVENTION

The present invention provides a chewable and/or edible product for pets and other animals, especially for companion animals, mainly composed of a fibrous collagen matrix formed in any shape or design (referred to herein as "the chewable and/or edible product of the invention").

All the advantages described previously are surprisingly combined in the product of the invention, which becomes an attractive product for pets, especially selective carnivorous pets, highly versatile, capable of adopting different textures and assuming diverse functions in the area of pet nutrition and husbandry. The product is mainly composed of fibrous collagen derived from any animal source.

The present invention refers to a chewable and/or edible product that is attractive to pets and very diverse animal species, preferably for carnivores and, more preferably, though not exclusively, for those accustomed to diets of wet food or fresh or live prey, since it can be made in a variety of shapes, colours and aromas that these animals find attractive. Also because it is a natural product based on animal collagen, and, therefore, edible, and because it has a texture, even at solid concentrations of less than 15% by weight, similar to that of fresh meat. It also refers to a product which, combining the previous characteristics, also plays a functional role, as it can present different textures suitable for various chewing activities or to prolong this activity favouring buccodental hygiene, or to be used as a vehicle to administer prophylactic, therapeutic or nutritional substances to treat the animals for which it is intended.

It is noteworthy that, in the context of the present specification, the chewable and/or edible product of the invention can also be referred to as "chewable" or a "snack" since its wide functionality confers it the character of being a product used for entertainment, to transfer nutritional or therapeutic substances, as a reward, or any combination of these functions, not essentially related to feeding; although it can also be used as a food product for the animals for which it is intended.

Collagen is a protein which, in its native state, has a fibrous structure, whose isolated fibres dispersed in water form a plastic and three-dimensional fibrillar matrix which, when coagulated or gelified by physico-chemical processes well known in the state of the art, becomes solid and insoluble. This matrix has always been a precursor in the manufacture of casings for sausages of meat products, after which they are subject to complex and delicate processes of forming, drying and curing until flexible films of high tenacity are obtained. After gelification, this precursor material acquires a meaty texture of variable hardness depending on the degree of swelling of the fibres with water, caused by the physicochemical conditions and, especially, the pH. Moreover, since this matrix is initially plastic, it can be moulded into any shape or design that is then fixed after coagulation or gelification. Surprisingly, it was found that a combination of texture, shape, colour, attractants, aromas, flavours, etc. can encourage different carnivorous animals belonging to a wide variety of species to chew and eat this collagen gel product, constituting a vehicle for entertainment, health and wellbeing of many pets often difficult to keep.

In the context of the present invention, it must be understood that the terms fibrillar or fibrous refer, indistinctly at all times, to molecular structures and substructures of substantially native collagen, that can be reconstituted as fibrous solid structures different to those resulting from a process of denaturation, which involves transformation of the collagen into gelatin.

The term "gelification" must be interpreted as, either a process of insolubilisation in which the water from an aqueous dispersion of fibrous collagen is removed by: (1) osmosis by immersion in a saline solution such as, for example, sodium chloride solution, or in organic solvents such as, for example, acetone and/or ethanol, or also in inorganic solvents such as soluble glass; (2) a change in the dispersion pH caused by immersion in an alkaline solution of sodium carbonate, sodium hydroxide, sodium bicarbonate, ammonium sulphate or ammonium hydroxide, for example, or by treatment with ammonium gas, etc.; or (3) a chemical restructuring of the fibrous matrix by immersion or addition of solutions in which the crosslinking collagen products are dissolved, promoting the generation of crossed bonds between collagen fibres, creating an insoluble three-dimensional matrix of connected fibres. It can also be interpreted as a combination of the described processes. Methods can also be used such as freezing the dispersion for a period of time and/or heat treatments. The gelification understood in this way, can fix the aqueous dispersion of fibrous collagen transforming it into a gel, which gives consistency and cohesion to the shaped product and a large part of its mechanical and physicochemical properties.

Owing to the plasticity of the aqueous dispersion of the fibrous collagen, this can be formed into a wide range of shapes capable of attracting animals, such as, for example, bones, geometric objects, fancy-shaped objects, balls or subspherical shapes, several cylindrical or elongated shapes, worm-like forms etc.; or can be a realistic or fancy imitation of any aquatic or terrestrial animal, or preferably, those most known to be the prey of some pets in the wild, such as worms, cephalopod molluscs, crustaceans, fish, batrachians, reptiles, rodents etc.

The peptidic nature of the chewable and/or edible product of the invention, in addition to making it edible permits, as described later, this to be combined with many different molecules such as substances that change its texture, substances that make it more palatable and that can constitute olfactory or hormonal attractants for the animals; or nutritional, therapeutic or prophylactic substances, for example, that can be added specifically in accordance with the functionality sought and the targeted species.

The fibrous collagen is derived from skins, cartilage, bone, tendons or intestines of vertebrates such as fish, amphibians, reptiles, birds or mammals; or organs of invertebrates such as coelenterates, sponges, worms, tunicates, echinoderms or molluscs that contain them.

It is known that the native collagen is a fibrous schleroprotein, a basic component of animal connective tissue and of bones and tendons. It is composed of 19 amino acids, without tryptophan, with a remarkably high content of glycine (33%), praline and hydroxyproline (22%). This high concentration of proline, hydroxyproline and glycine, which constitutes more than 50% of the aminoacids, is characteristic of all types of collagen. These aminoacids, which form a repetitive sequence together with a third aminoacid, play an important role in the three-dimensional shape of the collagen precursor, the tropocollagen molecule.

In this molecule, the amino acid chains are 290 nm long and form a triple helicoidal structure. Five molecules of tropocollagen are grouped longitudinally, with one quarter of their length overlapping to form a microfibril 3.6 nm in diameter. In turn, the miocrofibrils group together in a tetragonal structure to form subfibrils approximately 30 nm in diameter. These subfibrils are assembled to constitute the collagen fibril, which is the basic unit of connective tissues. The diameters of these fibrils vary from 50 to 500 nm, depending on the type of tissue and the age of the animal. The collagen fibrils are surrounded by an extracellular matrix that maintains the integrity and architecture of the collagen ("Hierarchical Structure of Collagen Composite Systems". E. Baer, J.J. Cassidy and A. Hiltner. Pure Appl. Chem. 1991, 63(7), 961-973). Finally, these fibrils group together to form fibres which, in turn, form bundles of fibres and fascicles of diverse structures and orientations, depending on the tissue that constitutes them, that result in the required physico-mechanical properties. These fibrillar or fibrous structures form the basis of this application.

As mentioned, the collagen of the fibrous matrix of the chewable/edible product of the invention can be substantially native collagen or partially hydrolyzed collagen, although reconstitutable so that it recovers the fibrillar structure of native collagen; although in several embodiments it can be combined with gelatin and other by-products of collagen hydrolysis.

Similarly, the collagen can be chemically modified collagen, such as succinylated, acylated, methylated or esterified collagen, for example.

Hence, in a specific embodiment of the chewable and/or edible product of the invention, the fibrous collagen can be derived from any animal source, and can be native, partially hydrolyzed or chemically modified.

In another specific embodiment, the chewable and/or edible product of the invention comprises, as well as the fibrous collagen matrix formed in any shape or design, a structural support element. This support can be made of any material suitable for supporting the matrix that can be chewed by the animal, such as, for example, plastic. Hence, for example, the chewable and/or edible plastic of the invention can be presented in the shape of a chicken drumstick with a plastic bone as a structural support element, having formed the fibrous collagen matrix in the shape of chicken flesh surrounding the bone.

As indicated previously, the chewable and/or edible product of the invention may be dry, semiwet or wet since the collagen matrix can contain very variable water contents.

Hence, in one embodiment of the invention, the chewable and/or edible product of the invention comprises 2 to 98% by weight of fibrous collagen relative to the total wet weight of the matrix.

In one preferred embodiment, the product of the invention is a soft chewable and/or edible product which comprises from 2 to 30%, preferably from 2 to 20%, more preferably from 4 to 12%, by weight of fibrous collagen relative to the total wet weight of the matrix.

In another preferred embodiment, the product of the invention is a dry chewable and/or edible product that comprises from 75 to 98%, preferably from 80 to 95%, and more preferably from 85 to 95%, and even more preferably, from 85 to 90%, by weight of fibrous collagen relative to the total wet weight of the matrix.

As mentioned, the use of crosslinking substances, which favour the formation of chemical crosslinked bonds, permits the fixation from dispersion to gel with the subsequent conferral of physicomechanical properties required for its handling and use as a chewable and/or edible product. Moreover, using these crosslinkers allows the collagen matrix to be attached to some of the non-collagenous molecules.

Therefore, in a specific embodiment of the chewable and/or edible product of the invention, the fibrous matrix comprises one or more crosslinkers. The crosslinkers used can include a wide range of substances. Hence, in a preferred, but not exclusive, embodiment of the invention, crosslinkers are selected from the group of aldehydes, preferably glyoxal, glutaraldehyde or formaldehyde; sugars; modified starches; aliphatic, aromatic or hydroaromatic diisocyanates, preferably hexamethylene diisocyanate; polyethylenglycol diglycidol ether; metallic cations, preferably aluminium or ferrous cations, oils and fats, preferably of polyunsaturated fatty acids; or protein-tanifying enzymes, preferably acyl transferases, transglutaminases (Ajinomoto, US 5968568, 1999; Zymogenetics, WO 97/40701, 1997), lacase or bilirubin oxidase; diepoxides such as 1,4 butanediol diglycil eter; and modified melamine resins; and combinations of these.

In another specific embodiment of the chewable and/or edible product of the invention, the matrix comprises one or more organoleptic additives. The substances considered as organoleptic include those that activate the sense organs (chemoreceptors or photoreceptors) of animals and increase the palatability of the chewable and/or edible product such as natural or synthetic aromatizers or flavourings, dyes, luminescent or reflectant substances etc. Therefore, in a preferred embodiment, organoleptic additives can be natural or synthetic, organic or inorganic, and are selected from among colourings, flavourings, aromatisers, luminescent substances, reflectant substances, and combinations of these.

The colourings can be organic or inorganic, natural or artificial, and are preferably selected from the group composed of annate, iron and titanium oxide, cochineal carmine, squid ink, caramel, glitter, indigo, chlorophyls, anthocyanins, carotenes, curcumines, charcoal, luminescent or phosphorescent substances, harmless or non-toxic for animals, and combinations of these. Therefore, the chewable and/or edible product of the invention can comprise one or more colourings or colour-modifying pigments, substances or particles that are already used in the food industry, such as those mentioned above. These colouring agents can give a more real or fantastic aspect to the wide variety of designs of chewable and/or edible products that can be obtained.

Flavourings or aromatisers can preferably, but not exclusively, correspond to proteins, peptides or protein hydrolizates and, more preferably, to the blood proteins of vertebrate and invertebrate animals, L-aminoacids, trimethyl-glycine, nucleotides, nucleosides, alcohols, sugars, fats, or extracts of meat, fish or any other organisms that can be combinations of natural or synthetic molecules that produce a bouquet similar to any raw or cooked culinary aroma.

In another specific embodiment of the chewable and/or edible product of the invention, the organoleptic additives are chemically crosslinked to the collagen molecules by crosslinkers.

In order to increase its nutritional value, the chewable and/or edible product of the invention can also include one or more non-collagenous proteins, texturised or not, of animal, plant or microbial origin, combined with the collagen in any combination and proportion.

Hence, in a specific embodiment of the chewable/edible product of the invention, the matrix comprises one or more non-collagenous proteins, texturised or not, of animal, plant or microbial origin. In a preferred embodiment, the non-collagenous proteins are selected from among proteins of animal origin, preferably keratin, elastin, milk serum, casein, albumin, fibrin, actin, myosin, gelatin or blood proteins; proteins of plant origin, preferably wheat gluten, zein or proteins of leguminous seeds such as soya or pea; and combinations of these.

In another specific embodiment of the chewable and/or edible product of the invention, the matrix comprises one or more stimulants. Substances considered as stimulants include those targeted to activate physiological processes that do not function by activating the senses, such as hormones that induce the alimentary activity enhancing food searching behaviour; hormones that induce initiation of sexual activity etc. Thus, in a preferred embodiment, these stimulants are selected from among hormonal inducers of alimentary behaviour, hormonal activators of food seeking, hormonal activators of reproductive activity, and combinations of these.

In another specific embodiment of the chewable/edible product of the invention, the matrix comprises one or more additives selected from among reinforcing agents, gelification agents, plastifying agents, lubricants, preservatives and antioxidants, therapeutic and prophylactic agents, nutritional agents, and combinations of these.

Both reinforcing agents and gelification agents are texturising agents capable of modifying the texture of the collagen gel.

In a preferred embodiment, the reinforcing agents are selected from among cellulose fibres; polysaccharides derived from chitin, preferably polymers of n-acetyl-glucosamine or chitosan; starches, preferably dialdehyde starch; synthetic resins, preferably hydrolyzed poly-vinyl-alcohol (PVA) in various degrees of hydrolysis, vinyl polyacetate or poly-vinylpyrrolidone; and water-soluble esterified polysaccharides, preferably propylene glycol alginate (PGA) (Higgins 1978 US 4096282). Furthermore, in some specific embodiments, as reinforcing agents it is possible to use filaments of cured collagen, ropes or plaited filaments of cured collagen, tissues or meshes of cured collagen, or strips or thin layers of cured collagen. By using these reinforcing agents, the fibrous structure can be strengthened and/or, in general, the physico-mechanical properties of the edible/chewable product can be improved.

In another preferred embodiment, gelification agents can be gelifiers from the group of cellulose esters, preferably carboxymethyl cellulose, hydroxymethyl cellulose, hydroxypropyl cellulose or hydroxypropylmethyl cellulose; or gelifiers of the group of hydrocolloids, preferably alginates (Easton 1986 US 4614794), carragenates, agar, furceralanes, chitosan, guar gum, garrofin gum, arabic gum, tragacanth gum, karaya gum, gellan gum, xanthan gum, pectins, glucomananes (Maynard 1999 US 5962053); or gelatin, textured proteins or honey; bound to gelification promoters selected from the group of metal salts of group IIA, preferably beryl, calcium or strontium, of group IIB, preferably zinc or cadmium, or group IIIA, preferably aluminium. These gelification promoters can induce gelification or complexation of some of the referred components to which they are bound.

These gelification compounds are hydrophilic compounds that help to retain water in the matrix, prolonging the hydrated state of the chewable and/or edible product and, hence, its fresh appearance. They also help to improve the elasticity and other mechanical properties of the product. In a preferred embodiment, these gelification agents are used in a proportion of 0.1 to 25%, preferably from 2 to 10%, more preferably from 1.5 to 5.5%, of the total dry weight of the matrix.

In another preferred embodiment of the invention, plastifying agents are selected from among polyhydric alcohols such as glycerol, sorbitol, sorbitan, mannitol, maltitol, propylene-glycol, ethylene-glycol, pantothenol or propylene-glycol alginate, polymeric sugars, saccharose or maltose. These low molecular weight edible plastifiers favour dispersion of the proteins in the plastic mass and help to improve the plastic properties of the chewable and/or edible product. In a preferred embodiment, these plastifier agents are used in a proportion of 10 to 25% of total dry weight of the matrix.

In another preferred embodiment of the invention, lubricants are selected from among fats, mono, di and triesters of edible polyhydric alcohols, vegetable oils, preferably hydrogenated, mineral oils; edible fatty acids; phospholipids, preferably lecithin; silicone oil and mucopolysaccharides.

The chewable and/or edible product of the invention can incorporate new preservatives and antioxidant substances to prolong the shelf life of the chewable and/or edible product, maintaining its properties and its fresh aspect. Hence, in another preferred embodiment of the invention, preservative agents and antioxidants are selected from among ascorbic acid, ascorbic palmitate, sodium bisulphite, calcium propionate, sorbic acid, potassium sorbate, butylated hydroxyanisol (BHA), butylated hydroxytoluene (BHT), ethoxychine, lactic acid, acetic acid, benzoic acid, sodium benzoate, ethyl-o-hydroxybenzoate, methyl-p-hydroxybenzoate, propyl-p-hydroxybenzoate, spices and plant extracts.

In another preferred embodiment of the invention, the therapeutic and prophylactic agents can be preventive agents of undesirable microbial development, such as vaccines, antiviral agents, oral disinfectants, etc.; or substances to treat animals affected by any type of deficiency-related, infectious illness or of any other aetiology.

In another preferred embodiment of the invention, nutritional agents correspond to all the vitamins, minerals and oligoelements, or complexes of these, required in the diet of the pets targeted.

Another aspect of the invention provides the use of fibrous collagen to prepare a chewable and/or edible product for pets and other animals, especially for companion animals, mainly composed of a fibrous collagen matrix formed in any shape or design.

Another aspect of the invention provides a fibrous collagen matrix formed in any of the previously described shapes or three-dimensional designs.

Another aspect of the invention provides a method to manufacture this chewable and/or edible product of the invention, described previously and comprising the following steps:
(a) preparing an aqueous dispersion of fibrous collagen at acidic pH; and
(b) shaping the dispersion obtained in (a).

In a specific embodiment of this process, the dispersion shaped in step (b) is coagulated in a saline solution.

In another specific embodiment of this invention, the dispersion moulded in step (b) is neutralized with an alkali.

In another specific embodiment of the invention, this method for produce a chewable and/or edible product comprises, prior to step (b), a step of mixing the dispersion obtained in (a) with one or more crosslinkers.

Likewise, to the aqueous solution of fibrous collagen obtained in step (a), with or without added crosslinkers, other optional ingredients described previously can also be added. Thus, in another specific embodiment, this method to produce a chewable and/or edible product of the invention comprises, prior to step (b), a step of mixing the dispersion obtained in (a) with one or more ingredients selected from among organoleptic additives, non-collagenous proteins, stimulants, reinforcing agents, gelification agents, plastifying agents, lubricants, preservatives and antioxidants, therapeutic and prophylactic agents, nutritional agents and mixtures of these.

As mentioned previously, it is known that collagen can form viscoelastic aqueous dispersions with a high water content; and that the greatest water contents occur at a pH of approximately 2 or 13, which correspond to the points of maximum swelling of the protein. Nonetheless, given the greater water contents reached at acid pH values, acidic dispersions will be preferred for an extrusion or injection process.

The collagen dispersion can be obtained by any of the techniques described in numerous patents to date, such as those developed in WO 92/01394, DE 642922, DE 659490, US 2920000, US 3123481, US 3123653, US 3314861, US 3664844, US 4196223, US 4407829, US 4615889, US 5411887 and US 5940849. Also, dispersions formed by soluble collagen treated with proteolytic enzymes can be used, as in the techniques described in US 3529530, US 4140537, US 4223984, US 4268131 and US 5456745; and that conserve the fibrillar structure of the native collagen although it can be partially hydrolyzed, in a way that this can be reconstituted; and also, the dispersions formed by mixtures of soluble and insoluble fibrous collagen, obtained by the methods described.

### Typical preparation of an aqueous dispersion of fibrous collagen

Fibrillar or fibrous collagen is recovered from natural sources (skin, tendons, intestines, for example) mainly by two methods: 1) preferably starting from skins or hides and dissolving the collagen with acids (for example, acetic acid), bases (for example, NaOH,) or diluted salts (for example, NaCl), or by enzymatic digestion with non-collagenase proteolytic enzymes (for example, pepsin, trypsin, pronase or proctase) from which a soluble fraction of atelopeptic and reconstitutable fibrillar collagen is obtained; or 2) by extraction, in solid and undissolved form, of fibres from tissues containing collagen (skin chorium and tendons) by the action of mechanical agents, sometimes accompanied by the enzymatic action of pancreatine, for example (to release the fibrillar bundles of elastin), as described below.

Generally, to obtain a fibrous collagen dispersion (an aspect that does not constitute an object of the invention), we can use different types of connective tissue such as skin, tendons, ligaments, etc. and/or digestive tissues, such as intestines, stomach, etc., derived from mammals, birds, reptiles and fish. More preferably, the chorium of cow and/or pig skin will be used, and the intestines of sheep and/or pigs. The process to obtain a dispersion of fibrous collagen can correspond to any of those described in the abundant literature mentioned, although preferably a method will be used that includes the steps described below.

When skin is used as a source of collagen tissue, whole skins can be used or hides that have been subject to a process of dehairing.

Fresh, salted or frozen skins can be used, that will be subject to the following treatments, although not all of these may be required nor must they strictly follow the order given here:
a) Washing and soaking the skins to remove the dirt, non-collagenous proteins and to hydrate the collagen fibres.
b) Dehairing, using sulphides and alkalis, with the purpose of hydrolysing and removing the hair.
c) Mechanical stripping to remove the fat and non-collagenous protein.
d) Splitting into two layers, to separate the chorium from the epidermis.
e) Mechanical chopping.
f) Defatting by physical, chemical or enzymatic processes.
g) Alkaline treatment, preferably with sodium and/or calcium hydroxide, with the objective of purifying, partially hydrolysing and opening up the structure of the collagen fibre.
h) Deliming, using acids, or ammonium salts.
i) Acid treatment, by adding inorganic acids such as hydrochloric acid, or organic acids such as acetic, lactic acid, etc. to achieve a pH with optimum swelling of the collagen fibres.
j) Milling and mechanical removing of fibres, to prepare an aqueous dispersion of fibrous collagen that may be shaped.

In the case that the collagen tissue source is the intestine and/or tendons, the materials used will be fresh, frozen, salted or conserved in brine. The tissues will be subjected to a process similar to that described for the hides:
a) Mechanical and/or manual removal of adhered fat.
b) Chopping.
c) Washing and soaking the material, in order to remove the dirt, non-collagenous proteins and to hydrate the collagen fibres.
d) Alkaline treatment, as in the previous case, preferably with sodium and/or calcium hydroxide, in order to purify, partially hydrolyse and open the collagen fibre structure.
e) Deliming using acids, or ammonia salts.
f) Acid treatment, by the action of inorganic acids such as hydrochloric acid, or organic acids such as acetic, lactic acid etc. in order to achieve a pH with optimum swelling of the collagen fibres.
g) Mechanical milling and removing of fibres, to prepare an aqueous dispersion of fibrous collagen that may be shaped.

In the case that a dispersion of soluble fibrillar collagen is obtained, to be used alone or in combination with previous ones, any of the known methods in the state of the art can be recommended, and as a reference, the one described in the patent US 4268131 of Miyata 1981, will be used.

Collagen mixtures from different sources of animals and/or tissues can be used as well as mixtures of collagen dispersions of different structure, depending on the physicochemical characteristics of the collagen they are made from.

The appropriate collagen contents of the dispersion obtained in this way can be adjusted by adding water and, during this dilution step the pH is also adjusted, which should preferably be in the interval from 1.5 to 4.0.

Where relevant, different ingredients can also be added, such as those mentioned previously (crosslinkers, organoleptic additives, non-collagenous proteins, reinforcing agents, gelification agents, plastifying agents, lubricants, preservatives and antioxidants, therapeutic and prophylactic agents, nutritional agents, or combinations of these), although some of these can be incorporated into the aqueous collagen dispersion in later steps.

Then, where necessary, this is subjected to a mechanical homogenising process, in which the collagen fibres are reduced to the appropriate size, to favour the forming operations.

This process is carried out at a temperature at which no substantial denaturation or degradation of the collagen occurs.

All the treatments in which the collagen tissue sources and/or the aqueous dispersion of fibrous collagen are at a pH ≤ 4.0 and/or a pH ≥ 10, are carried out at a temperature ≤ 25 °C, with the aim of conserving the fibrillar structure of the collagen, and avoiding its undesired conversion into gelatin, since, at this point all the physicochemical and mechanical properties of the fibrillar collagen start to decline.

It is necessary to indicate that the term aqueous dispersion of fibrous collagen, in the context of the present invention, must be understood as referring to a single aqueous dispersion or to the result of the mixture before or simultaneous to the forming of two or more aqueous dispersions of different nature or composition, although preferably based on fibrous collagen, as described previously. One or more of the components of these dispersions can vary, such as, for example, the colouring agents to obtain fanciful designs for the chewable and/or edible products of the invention, or any of the previously mentioned ingredients.

The aqueous dispersion of fibrous collagen, preferably acid, can be submitted to a forming process to obtain different shapes and figures, followed, optionally, by a process of fixation or gelification.

In relation to the shape of the chewable and/or edible product of the invention, numerous shapes can be made, imitating pets, the natural prey of some pets, and also abstract, geometric figures and non-geometric figures etc.

Hence, in a specific embodiment of the invention, the chewable and/or edible product of the invention has been formed into a geometric shape. In a preferred embodiment, the chewable and/or edible product of the invention has been formed into a geometric shape selected from a tube shape or a rope shape. In a more preferred embodiment, the chewable and/or edible product of the invention has been formed into a rope shape, selected from among a cylindrical rope and a non-cylindrical rope. In another more preferred embodiment, the chewable and/or edible product has been formed into the shape of a tube with a wall thicker higher than 300 micrometers. In another more preferred embodiment, the surface area of the rope or the tube is striated and/or divided into transversal or longitudinal segments. In another more preferred embodiment, the rope or tube is twisted to create a helicoidal profile. In another more preferred embodiment, the rope or tube has several concentric layers that can have a different composition and texture.

In another specific embodiment, the chewable and/or edible product of the invention has been formed into a geometric shape selected from among spherical, subspherical, polyhedric and subpolyhedric figures.

In another specific embodiment, the chewable and/or edible product of the invention has been formed into a non-geometric shape selected from among the figure of an object or the figure of an animal. In a preferred embodiment, the chewable and/or edible product has been formed in the shape of a bone. In another specific embodiment, the chewable and/or edible product has been formed into the shape of an animal, considered as a pet or as natural prey of a pet. In another more preferred embodiment, the chewable and/or edible product has been formed in the shape of a mammal, worm, batrachium, reptile, fish, mollusc, crustacean or an echinoderm. In another even further preferred embodiment, the edible and/or chewable product has been formed in the shape of a dog, cat, mouse, earthworm, marine polychaete, frog, salamander, newt, lizard, crucian carp, a squid, a crab, or a starfish.

Some of these preferred embodiments and shapes are shown in the figures, which, for illustrative purposes, are enclosed with this invention. The examples described below serve to illustrate the invention, and do not in any way limit its possible applications.

### PREFERRED EMBODIMENTS

In a preferred embodiment, the mixture of the aqueous dispersion of fibrous collagen and, optionally, one or more of the cited ingredients, is formed into a cylindrical shape, such as a rope of variable length (Fig. 1A). In another preferred embodiment, the said rope has knots at both ends, like the traditional "knotted hides" (Fig. 1 B).

In another preferred embodiment, the mixture is formed into a rope with a regular star-shaped cross-section (Fig. 2).

It is also possible that the cross-section of the rope, whatever its shape, is composed of several concentric layers or membranes of diverse composition (Fig. 3). As indicated, the composition of these membranes can have a variable formulation. In other preferred variations, the composition of these concentric membranes, even the most external one, could contain one or several additional non-collagenous substances, as mentioned previously, mixed together in any proportion, and more preferably, those classed as gelifiers (preferably hydrocolloids), organoleptic additives and reinforcing agents. The formulation of these covers can include, for example, one different colour type, different particles and substances or molecules considered as organoleptic additives. Figure 3 shows with different intensities of grey, the different composition of the concentric layers.

In another preferred embodiment, the mixture is shaped into a tubular figure (Fig. 4) of variable length. The interior space of the tube can be of a wide range of diameters and the exterior surface can be smooth, segmented or transversally or longitudinally striated.

In another preferred embodiment, the mixture is formed into an elongated tubular figure cut into segments with similar diameter to length (Fig. 5).

In another preferred embodiment, the mixture is formed into a spherical, spheroid or oval figure (Fig. 6).

In a preferred embodiment, the mixture is formed into a fantastical bone shape, like the traditional "dog's bone" (Fig. 7).

In another preferred embodiment, the mixture is formed into a realistic or fancy mouse shape (Fig. 8).

In another preferred embodiment, the mixture is formed into an elongated cylindrical rope of variable length, composed of several concentric layers of variable composition, with a striation or transversal segmentation like the rings of a fancy worm (Fig. 9).

In another preferred embodiment, the mixture is formed into a fish shape of any class or size, realistic or fantastical (Fig. 10).

In another preferred embodiment, the mixture is formed into a marine polychaete worm shape of any class or size (Fig. 11).

In another specific embodiment, the mixture is formed into a figure that imitates a squid (Fig. 12).

In another preferred embodiment, the mixture is formed into a figure that imitates a land worm such as an earthworm (Fig. 13).

In another preferred embodiment, the mixture is formed into a figure shaped like a frog (Fig. 14);

In another preferred embodiment, the mixture is formed into a figure in the shape of a salamander or newt (Fig. 15).

In another preferred embodiment, the mixture is formed into a figure shaped like a crab (Fig. 16).

In another preferred embodiment, the mixture is formed into a figure shaped like a chicken drumstick with a plastic bone as a structural support element for the fibrous collagen matrix, formed with a meat-like aspect (Fig. 17).

In another preferred embodiment, the mixture is formed into a figure shaped like a twisted tube to create a helicoidal profile (Fig. 18).

In general, the chewable and/or edible product of the invention based on the fibrous collagen obtained in this way, has a solid consistency and a hard or soft texture depending on the content of water and other additives; a shiny surface and a wet appearance. It resembles meat and, depending on the colour incorporated into the aqueous dispersion of fibrous collagen, and the shape given to it, the product can constitute a good imitation of any plaything or food for pets and, as seen here, can acquire the ability of sensitive olfactory attraction for our animals.

## Claims

1. Chewable and/or edible product for pets and other animals, and especially for companion animals, composed mainly of a fibrous collagen matrix formed in any shape or design.

2. Chewable and/or edible product according to claim 1, **characterised in that** the fibrous collagen is from any animal source, and can be native, partially hydrolyzed or chemically modified.

3. Chewable and/or edible product according to any one of claims 1 to 2, **characterised in that** it comprises, as well as the fibrous collagen matrix formed in any shape or design, a structural support element.

4. Chewable and/or edible product according to any one of claims 1 to 3, **characterised in that** it comprises 2 to 98% by weight of fibrous collagen compared to the total wet weight of the matrix.

5. Chewable and/or edible product according to claim 4, **characterised in that** it is a soft, chewable and/or edible product that comprises from 2 to 30% by weight of fibrous collagen compared to the total wet weight of the matrix.

6. Chewable and/or edible product according to claim 5, **characterised in that** it comprises from 2 to 20% by weight of fibrous collagen compared to the total wet weight of the matrix.

7. Chewable and/or edible product according to claim 6, **characterised in that** it comprises from 4 to 12% by weight of fibrous collagen compared to the total wet weight of the matrix.

8. Chewable and/or edible product according to claim 4, **characterised in that** it is a dry chewable and/or edible product that comprises from 75 to 98% by weight of fibrous collagen compared to the total wet weight of the matrix.

9. Chewable and/or edible product according to claim 8, **characterised in that** it comprises from 80 to 95% by weight of fibrous collagen compared to the total wet weight of the matrix.

10. Chewable and/or edible product according to claim 9, **characterised in that** it comprises from 85 to 95% by weight of fibrous collagen compared to the total wet weight of the matrix.

11. Chewable and/or edible product according to claim 10, **characterised in that** it comprises from 85 to 90% by weight of fibrous collagen compared to the total wet weight of the matrix.

12. Chewable and/or edible product according to any one of the preceding claims, **characterised in that** the matrix comprises one or more crosslinkers.

13. Chewable and/or edible product according to claim 12, **characterised in that** the crosslinkers are selected from among aldehydes, preferably glyoxal, glutaraldehyde or formaldehyde; sugars, modified starches; aliphatic, aromatic or hydroaromatic diisocyanates, preferably hexamethylene diisocyanate; polyethyleneglycol diglycidol ether; metallic cations, preferably aluminium or ferrous cations; oils and fats, preferably of polyunsaturated fatty acids; or protein-tanifying enzymes, preferably acyl transferases, transglutaminases, lacase or bilirubin oxidase; diepoxides such as 1,4 butanediol diglycil ether; and modified melamine resins; and combinations of these.

14. Chewable and/or edible product according to any one of the preceding claims, **characterised in that** the matrix comprises one or more organoleptic additives.

15. Chewable and/or edible product according to claim 14, **characterised in that** the organoleptic additives can be natural or synthetic, organic or inorganic, and are selected from among colourings, flavourings, aromatisers, luminescent substances, reflectant substances, and combinations of these.

16. Chewable and/or edible compound according to any one of claims 14 to 15, **characterised in that** the organoleptic additives are chemically crosslinked to the collagen molecules by crosslinkers.

17. Chewable and/or edible product according to any one of the preceding claims **characterised in that** the matrix comprises one or more non-collagenous proteins, texturised or not, of animal, plant or microbial origin.

18. Chewable and/or edible product according to claim 17, **characterised in that** the non-collagenous proteins are selected from among proteins of animal origin, preferably, keratin, elastin, milk serum, casein, albumin, fibrin, actin, myosin, gelatin or blood proteins; proteins of plant origin, preferably wheat gluten, zein or proteins of leguminous seeds such as soya or pea; and combinations of these.

19. Chewable and/or edible product according to any one of the preceding claims, **characterised in that** the matrix comprises one or more stimulants.

20. Chewable and/or edible product according to claim 19, **characterised in that** the stimulants are selected from among hormonal inducers of alimentary behaviour, hormonal activators of food seeking, hormonal activators of reproductive activity, and mixtures of these.

21. Chewable and/or edible product according to any one of the preceding claims, **characterised in that** the matrix comprises one or more additives selected from among reinforcing agents, gelification agents, plastifying agents, lubricants, preservatives and antioxidants, therapeutic and prophylactic agents, nutritional agents, and mixtures of these.

22. Chewable and/or edible product according to any one of claims 1-21, **characterised in that** it has been formed into a geometric shape.

23. Chewable and/or edible product according to claim 22, **characterised in that** it has been formed into a geometric shape selected from between a tube and a rope.

24. Chewable and/or edible product according to claim 23, **characterised in that** it has been formed into a rope shape selected from a cylindrical rope or non-cylindrical rope.

25. Chewable and/or edible product according to claim 23, **characterised in that** it has been formed into a tube shape with a wall thicker higher than 300 micrometers.

26. Chewable and/or edible product according to claim 23, **characterised in that** the surface of the rope or tube is striated and/or segmented, transversally or longitudinally.

27. Chewable and/or edible product according to claim 23, **characterised in that** the rope or tube is twisted to make a helicoidal shape.

28. Chewable and/or edible product according to claim 23, **characterised in that** the rope or tube has several concentric layers that can have different composition and texture.

29. Chewable and/or edible product according to claim 22, **characterised in that** it has been formed into a geometric shape selected from among spherical, subspherical, polyhedric and subpolyhedric figures.

30. Chewable and/or edible product according to any one of claims 1-21, **characterised in that** it has been formed into a non-geometric shape selected from among a figure of an object and a figure of an animal.

31. Chewable and/or edible product according to claim 30, **characterised in that** it has been formed into a bone shape.

32. Chewable and/or edible product according to claim 30, **characterised in that** it has been formed into the shape of an animal considered to be a pet or a natural prey of a pet.

33. Chewable and/or edible product according to claim 32, **characterised in that** it has been formed into the shape of a mammal, worm, batrachium, reptile, fish, mollusc, crustacean or an echinoderm.

34. Chewable and/or edible product according to claim 33, **characterised in that** it has been formed into the shape of a dog, cat, mouse, earthworm, marine polychaete worm, frog, salamander, newt, lizard, crucian carp, squid, crab or starfish.

35. Use of fibrous collagen to prepare a chewable and/or edible product for pets and other animals, especially for companion animals, mainly composed of a fibrous collagen matrix formed into any shape or design.

36. Fibrous collagen matrix formed in any shape or three-dimensional design according to any one of claims 22 to 34.

37. Method to produce a chewable and/or edible product for pets and other animals, especially for companion animals, which comprises the following steps:
(a) preparing an aqueous dispersion of fibrous collagen at acid pH; and
(b) shaping the dispersion obtained in (a).

38. Method to produce a chewable and/or edible product according to claim 37, **characterised in that** the dispersion shaped in step (b) is coagulated in a saline solution.

39. Method to produce a chewable and/or edible product according to claim 37, **characterised in that** the dispersion shaped in step (b) is neutralized with an alkali.

40. Method to produce a chewable and/or edible product according to any one of claims 37 to 39, **characterised in that**, before step (b), it comprises a step of mixing the dispersion obtained in (a) with one or more crosslinkers.

41. Method to produce a chewable and/or edible product according to any one of claims 37 to 40, **characterised in that**, before step (b), it comprises a step of mixing the dispersion obtained in (a) with one or more ingredients selected from among organoleptic additives, non-collagenous proteins, stimulants, reinforcing agents, gelification agents, plastifying agents, lubricants, preservatives and antioxidants, therapeutic and prophylactic agents, nutritional agents, and mixtures of these.
